# EUROPEAN PATENT SPECIFICATION

(11) **EP 4 027 310 B1**
(45) Date of publication and mention of the grant of the patent: **12.03.2025**
(21) Application number: 21216004.8
(22) Date of filing: 20.12.2021
(51) Int. Cl.: G07C 9/00, G07C 9/10, G07C 9/30, G06Q 10/083, G06Q 10/08

(54) **CONTROL METHOD FOR SAFETY DOOR, SAFETY DOOR SYSTEM AND INTELLIGENT WAREHOUSING SYSTEM**
STEUERUNGSVERFAHREN FÜR SICHERHEITSTÜR, SICHERHEITSTÜRSYSTEM UND INTELLIGENTES LAGERSYSTEM
PROCÉDÉ DE COMMANDE DE PORTE DE SÉCURITÉ, SYSTÈME DE PORTE DE SÉCURITÉ ET SYSTÈME D'ENTREPOSAGE INTELLIGENT

(30) Priority: 06.01.2021 CN 202110010634
(43) Date of publication of application: 13.07.2022
(73) Proprietor: Shanghai Quicktron Intelligent Technology Co., Ltd, Shanghai 200435 (CN)
(72) Inventor: HU, Zhichuan, Shanghai (CN); WU, Haixian, Shanghai (CN); YANG, Wei, Shanghai (CN)
(74) Representative: SONN Patentanwälte GmbH & Co KG

(56) References cited:
- CN-A- 110 421 597
- CN-A- 111 462 375
- CN-A- 112 017 351

## Description

### TECHNICAL FIELD

The present invention substantially relates to the technical field of intelligent warehousing, especially to a control method for a safety door, a safety door system and an intelligent warehousing system.

### BACKGROUND ART

In the current fields of logistics and warehousing, automatic guided vehicles (AGVs) have been used increasingly to replace or supplement manual labor, and also effectively improve transportation efficiency. An automatic guided vehicle can automatically receive a goods carrying task, i.e., under the program control, reaching a first position, obtaining the goods, then walking to a second position, unloading the goods and continuing to perform other tasks.

In medium and large warehouses, particularly those with multiple warehouse areas, there may be a situation that multiple warehouses are separated by safety doors. In this situation, an automatic guided vehicle must interact with the safety doors if it intends to conduct cross-warehouse tasks. In the prior art, when an automatic guided vehicle passes through the safety door of a warehouse, especially one with multiple warehouse areas, it is usual that the staff of the warehouse opens or closes the safety door by manual operation, or the safety door is often open, so that the automatic guided vehicle can pass through the safety door smoothly. How a plurality of automatic guided vehicles can reciprocally open and close doors to come in and go out without affecting each other, as if they were operated by staff, has become a problem and difficulty in the field of intelligent warehousing.

CN patent application CN112017351A provides a door-passing control method and system for a self-propelled robot, equipment and a storage medium. The door-passing control method comprises the steps that: the self-propelled robot obtains inspection task information and determines a walking route and a closing door needing to be passed according to the inspection task information; the self-propelled robot sends door opening request information to a door control system when advancing to a preset distance away from a target closed door; the door control system receives the door opening request information and obtains a monitoring result of a sensor of the target closed door according to an identifier; when it is determined that the target closed door has a door opening condition, the door control system controls the target closed door to be opened; and when it is determined that the target closed door does not have the door opening condition, the door control system sends out a manual processing notice.

CN patent application CN111462375A provides an access control method and device, an inspection system and electronic equipment. The access control method comprises the steps that access position information and an inspection path are determined; access control point information is determined, wherein the access control point information is determined based on the inspection path and the access position information; and an access control instruction is sent to an access control system, so that the access control system controls a specified access to be in a specified state, wherein when the access control instruction is triggered, a robot is located at an access control point corresponding to the access control point information, and the specified access is an access corresponding to the current access control point where the robot is located.

CN patent application CN110421597A discloses an automatic door opening and closing system controlled by a robot. The automatic door opening and closing system comprises a door opening and closing, a control system, a wireless base station and a robot, wherein a wireless client is arranged on the robot and can realize the wireless communication with the wireless base station through an antenna arranged on the robot; and the wireless base station is connected with the control system through a network cable. The door opening and closing is electrically connected with the control system, so that a shutter door can be automatically opened when the robot reaches the door opening and closing position, and the shutter door can be automatically closed when the robot passes the door opening and closing position; and when the door opening and closing breaks down or a barrier exists near the door opening and closing position, the robot can work normally and safely under the circumstance without human intervention.

The contents in the Background Art are merely the technologies known by the inventors, and do not necessarily represent the prior art in the field.

### SUMMARY OF THE INVENTION

By providing a control method for a safety door, the examples of the present invention solve the problem in the prior art that a plurality of automatic guided vehicles cannot pass through safety doors without manual operation by staff, or can pass only if the safety doors are set often open.

In view of at least one defect of the prior art, the present invention provides a control method for a safety door, wherein a preset point location is arranged in the proximity of the safety door, the control method comprising:
S101: detecting whether an automatic guided vehicle arrives at the preset point location;
S102: obtaining a previous interactive instruction to the safety door when it is detected that the automatic guided vehicle arrives at the preset point location; and
S103: controlling the safety door according to a type of the previous interactive instruction,
wherein when the preset point location comprises a door-opening point location, then the step S101 comprises: detecting whether the automatic guided vehicle arrives at the door-opening point location; and
the step S103 comprises:
   sending, by the controller, a door-opening request instruction to the safety door when the previous interactive instruction is a door-closing request instruction;
   inquiring, by the controller, a state of the safety door when the previous interactive instruction is a door-opening request instruction;
   inquiring, by the controller, a state of the safety door after a preset time since the door-opening request instruction is sent to the safety door when the previous interactive instruction is a door-closing request instruction;
   recording, by the controller, an open relationship between the safety door and the automatic guided vehicle when the state of the safety door is open; and sending, by the controller, a door-opening request instruction to the safety door when the state of the safety door is closed; and
   notifying, by the controller, the automatic guided vehicle to pass after recording the open relationship between the safety door and the automatic guided vehicle, and
   wherein when the preset point location comprises a door-closing point location, then the step S101 comprises: detecting whether the automatic guided vehicle arrives at the door-closing point location; and
   the step S103 comprises:
      sending, by the controller, a door-closing request instruction to the safety door, then cancelling, by the controller, the open relationship between the automatic guided vehicle and the safety door, and notifying, by the controller, the automatic guided vehicle to pass when the previous interactive instruction is a door-closing request instruction;
      inquiring, by the controller, whether there are other automatic guided vehicles that have sent a door-opening request but have not sent a door-closing request when the previous interactive instruction is a door-opening request instruction, and cancelling, if so, by the controller, the open relationship between the current automatic guided vehicle and the safety door, and notifying, by the controller, the automatic guided vehicle to pass; otherwise sending, by the controller, a door-closing request instruction, cancelling, by the controller, the open relationship between the automatic guided vehicle and the safety door, and notifying, by the controller, the automatic guided vehicle to pass.

The present invention also relates to an intelligent warehousing system, comprising:
an automatic guided vehicle;
a safety door capable of being opened or closed, wherein a preset point location is arranged in the proximity of the safety door;
a controller in communication with the automatic guided vehicle and with the safety door to control the opening or closing of the safety door,
wherein when the automatic guided vehicle arrives at the preset point location, the automatic guided vehicle reports to the controller, and the controller obtains a previous interactive instruction to the safety door and controls the safety door according to a type of the previous interactive instruction,
wherein when the preset point location comprises a door-opening point location, then the automatic guided vehicle reports to the controller when arriving at the door-opening point location; and the controller is configured to send a door-opening request instruction to the safety door when the previous interactive instruction is a door-closing request instruction, and inquire a state of the safety door when the previous interactive instruction is a door-opening request instruction;
the controller is further configured to inquire a state of the safety door after a preset time since the door-opening request instruction is sent to the safety door when the previous interactive instruction is a door-closing request instruction, record an open relationship between the safety door and the automatic guided vehicle when the state of the safety door is open, and send a door-opening request instruction to the safety door when the state of the safety door is closed; and
the controller is further configured to notify the automatic guided vehicle to pass after recording the open relationship between the safety door and the automatic guided vehicle, and
wherein when the preset point location comprises a door-closing point location, then the automatic guided vehicle reports to the controller when arriving at the door-closing point location; and the controller is further configured to send a door-closing request instruction to the safety door, cancel the open relationship between the automatic guided vehicle and the safety door and notify the automatic guided vehicle to pass when the previous interactive instruction is a door-closing request instruction, inquire whether there are other automatic guided vehicles that have sent a door-opening request but have not sent a door-closing request when the previous interactive instruction is a door-opening request instruction, cancel, if so, the open relationship between the current automatic guided vehicle and the safety door and notify the automatic guided vehicle to pass; otherwise send a door-closing request instruction, cancel the open relationship between the automatic guided vehicle and the safety door and notify the automatic guided vehicle to pass.

According to one aspect of the present invention, a QR code is arranged on the point location, wherein the QR code comprises the pattern, then the automatic guided vehicle is capable of judging the preset point location by scanning and identifying the QR code, and configured to stop at the preset point location when the preset point location is identified.

According to one aspect of the present invention, it further comprises a storage unit, in which the interactive instruction to the safety door and the open relationship between the automatic guided vehicle and the safety door are stored.

A control method for a safety door is provided in the examples of the present invention, such that a plurality of automatic guided vehicles can interact with a safety door when passing through the same, thereby realizing the smooth passage of the plurality of automatic guided vehicles through the safety door.

### BRIEF DESCRIPTION OF THE DRAWINGS

The drawings that constitute part of the specification are provided for the purpose of further understanding the present invention, which are listed to explain the present invention together with the examples thereof, but do not make any limitation of the same. In the drawings:
FIG. 1 is a schematic diagram illustrating an intelligent warehousing system according to one example of the present invention;
FIG. 2 is a flowchart of a control method for a safety door according to one example of the present invention; and
FIG. 3 is a flowchart of a control method for a safety door according to the present invention.

### DETAILED DESCRIPTION OF THE EMBODIMENTS OF THE INVENTION

Certain exemplary examples will be described below only in a brief manner. Just as those skilled in the art will recognize .

**In** the description of the present invention, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position as shown in the accompanying drawings, and are used only for the purpose of facilitating description of the present invention and simplification of the description, instead of indicating or suggesting that the denoted devices or elements must be oriented specifically, or configured or operated in some specific orientation. Thus, such terms should not be construed to limit the present invention. In addition, such terms as "first" and "second" are only used for the purpose of description, rather than indicating or suggesting relative importance or implicitly indicating the number of the designated technical features. Accordingly, features defined with "first" or "second" may, expressly or implicitly, include one or more of such features. In the description of the present invention, "plurality" means two or above, unless otherwise defined explicitly and specifically.

In the description of the present invention, it needs to be noted that, unless otherwise specified and defined explicitly, such terms as "mount" "link" and "connect" should be understood as generic terms. For example, connection may refer to fixed connection, dismountable connection, or integrated connection; also to mechanical connection, electrical connection or intercommunication; further to direct connection, or connection by an intermediary medium; or even to internal communication between two elements or interaction between two elements. For those skilled in the art, they can construe the specific meaning of such terms herein in light of the specific circumstances.

Herein, unless otherwise specified and defined explicitly, if a first feature is "above" or "below" a second one, this may cover the direct contact between the first and second features, also cover the contact via another feature therebetween, instead of the direct contact. Furthermore, if a first feature "above", "over" or "on the top of" a second one, this may cover the case that the first feature is right above or on the inclined top of the second feature, or just indicate that the first feature has a horizontal height higher than that of the second feature. If a first feature is "below", "under" or "on the bottom of" a second feature, this may cover the case that the first feature is right below and on the inclined bottom of the second feature, or just indicates that the first feature has a horizontal height lower than that of the second feature.

The disclosure below provides many different embodiments and instances so as to achieve different structures described herein. In order to simplify the disclosure herein, the following will give the description of the parts and arrangements embodied in specific instances. Surely, they are just for the exemplary purpose, not intended to limit the present invention. Besides, the present invention may repeat a reference number and/or reference letter in different instances, and such repeat is for the purpose of simplification and clarity, which does not represent any relation among various embodiments and/or arrangements as discussed. In addition, the present invention provides instances of various specific techniques and materials, but those skilled in the art can also be aware of application of other techniques and/or use of other materials.

The preferred examples of the present invention will be introduced below referring to the drawings. It should be appreciated that the preferred examples described herein are only for the purpose of illustrating and explaining, instead of restricting, the present invention.

In a warehouse in the modern intelligent warehousing industry, both a warehouse keeper and an automatic guided vehicle (AGV) may pass through a safety door as required by work. The safety door in the present invention includes, for example, a door circuit, door control hardware and a door control manual switch, wherein the door control manual switch and the door control hardware are arranged to connect with each other in parallel, and coupled with the door circuit respectively. According to the present invention, a preset point location near the safety door is manually configured on the map, such that a controller is notified when the automatic guided vehicle arrives at the preset point location, and the controller makes a decision and controls the opening or closing of the safety door by interacting with the door control hardware through the ModbusTcp protocol. At the same time, the parallel arrangement for the door control manual switch and the door control hardware makes it possible to open and close the safety door even by manually clicking the door opening and closing button, thereby enabling more flexible interaction among the man, the automatic guided vehicle and the safety door.

The present invention relates to a safety door system, comprising a safety door and a controller, wherein the safety door can be opened or closed, and there is a preset point location near the safety door. Among them, the preset point location includes a door-opening point location, a door-closing point location and an edge relationship. Alternatively, the preset point location comprises a QR code, and the edge relationship represents a vector direction in the QR code to distinguish the door-opening point location from the door-closing point location. The controller communicates with the safety door to control the opening or closing of the safety door, and the controller is configured to execute any one of the control methods for the safety door as described above.

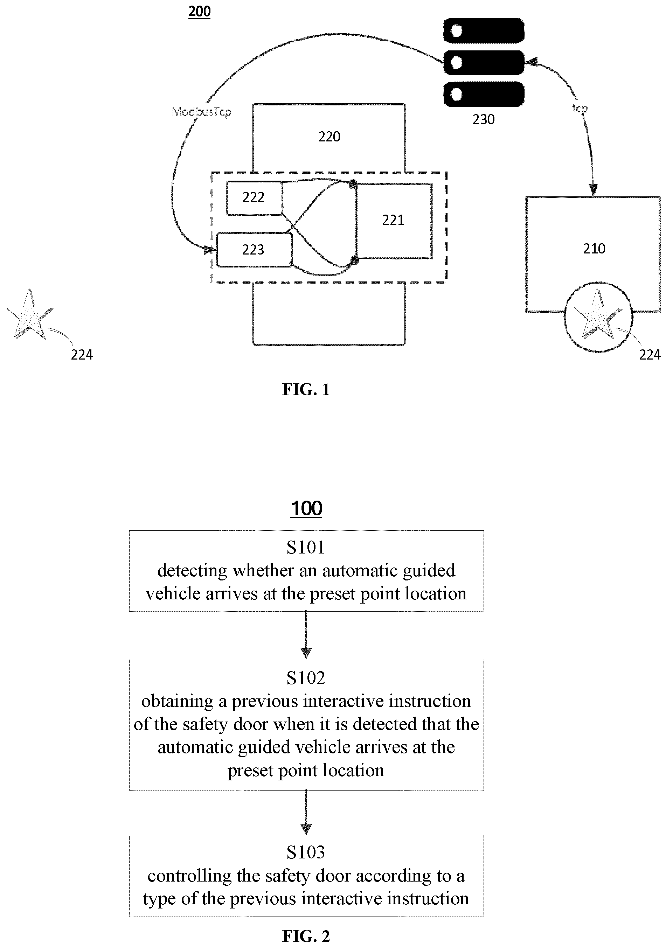

FIG. 1 is a schematic diagram illustrating an intelligent warehousing system according to one example of the present invention, in which the intelligent warehousing system 200 can be used to implement a control method 100 and/or a control method 110 for a safety door according to the present invention. As shown in FIG. 1, the intelligent warehousing system 200 comprises an automatic guided vehicle 210, a safety door 220 and a controller 230. Among them, the safety door 220 can be opened or closed, and, alternatively, comprises a door circuit 221, a door control manual switch 222 and door control hardware 223, wherein the door control manual switch 222 and the door control hardware 223 are coupled with the door circuit respectively, and there is a preset point location 224 in the proximity of the safety door 220. The preset point location 224 comprises a door-opening point location, a door-closing point location and an edge relationship. According to one example of the present invention, a QR code is arranged on the preset point location 224, and the edge relationship represents a vector direction in the QR code to distinguish the door-opening point location from the door-closing point location. Specifically, two edge relationships may be arranged at the preset point location 224. For example, when the automatic guided vehicle 210 travels to the position in FIG. 1, two edge relationships including one away from the door (towards the right in FIG. 1) and the other close to the door (towards the left in FIG. 1) are arranged in the preset point location 224 where the automatic guided vehicle 210 is located. When the automatic guided vehicle 210 is traveling along a path towards the left (close to the door), the preset point location 224 is identified as a door-opening point location according to the edge relationship close to the door, and when the automatic guided vehicle 210 is traveling along a path towards the right (away from the door), the preset point location 224 is identified as a door-closing point location according to the edge relationship away from the door. In addition, the automatic guided vehicle 210 can judge the preset point location 224 by scanning and identifying the QR code. Then the automatic guided vehicle 210 is configured to stop at the preset point location 224 when the preset point location 224 is identified. The controller 230 communicates with the automatic guided vehicle 210 and with the safety door 220 to control the opening or closing of the safety door 220. When the automatic guided vehicle 210 arrives at the preset point location 224, the automatic guided vehicle 210 reports to the controller 230, and then the controller 230 obtains a previous interactive instruction of the safety door 220 and controls the safety door 220 according to a type of the previous interactive instruction.

FIG. 1 illustratively shows two preset point locations 224, which are located on the left and right sides of the safety door 220 respectively. The present invention does not restrict the number of the preset point locations 224, and a plurality of preset point locations 224 may be arranged on both sides of the safety door 220. In addition, according to one example of the present invention, each preset point location only corresponds to a door-opening point location or a door-closing point location; or alternatively, each preset point location may also be both a door-opening point location and a door-closing point location. These are within the protection scope of the present invention.

In addition, those skilled in the art easily understand that although the QR code is used to identify the preset point location as described above, the present invention is not limited to this because the preset point location may also be identified in other ways. For the sake of clarity, the QR code will be taken hereinbelow as an example for explanation.

FIG. 2 is a flowchart of a control method for a safety door according to one example of the present invention, in which there is a preset point location near the safety door. As shown in FIG. 2, the control method 100 for the safety door comprises:
in step S101: detecting whether an automatic guided vehicle arrives at the preset point location that is preset on the ground near the safety door and obtained by manual configuration on the map. The preset point location comprises a door-opening point location, a door-closing point location and an edge relationship. Alternatively, the preset point location comprises a QR code, the edge relationship represents a vector direction in the QR code, and the automatic guided vehicle distinguishes whether it arrives at the door-opening point location or the door-closing point location according to the edge relationship. As shown in FIG. 1, the automatic guided vehicle 210 travels on the ground of the warehouse and continuously collects patterns on the ground. When the automatic guided vehicle travels above the preset point location 224, it collects the pattern of the QR code on the preset point location 224, then performs image processing and decoding, and identifies the QR code, thereby judging that the automatic guided vehicle has reached the preset point location. Preferably, it can be identified whether the preset point location is a door-opening point location or a door-closing point location according to the results of the image processing and decoding.
in step S102: obtaining a previous interactive instruction of the safety door when it is detected that the automatic guided vehicle arrives at the preset point location. Alternatively, the previous interactive instruction includes a door-opening request instruction or a door-closing request instruction, and the previous interactive instruction can be stored in the controller 230. According to one example of the present invention, when the automatic guided vehicle arrives at the preset point location, a current state of the safety door is judged while the previous interactive instruction of the safety door is being inquired and judged. Step S102 may be performed by the controller 230 or by the automatic guided vehicle 210.
in step S103: controlling the safety door according to a type of the previous interactive instruction. In the present invention, when it is detected that the automatic guided vehicle arrives at the preset point location, it will not simply perform such operations as opening or closing the door, but first obtain the previous interactive instruction of the safety door and then control the safety door according to the type of the previous interactive instruction. When the automatic guided vehicle reaches the preset point location, how to control the safety door will be further described below.

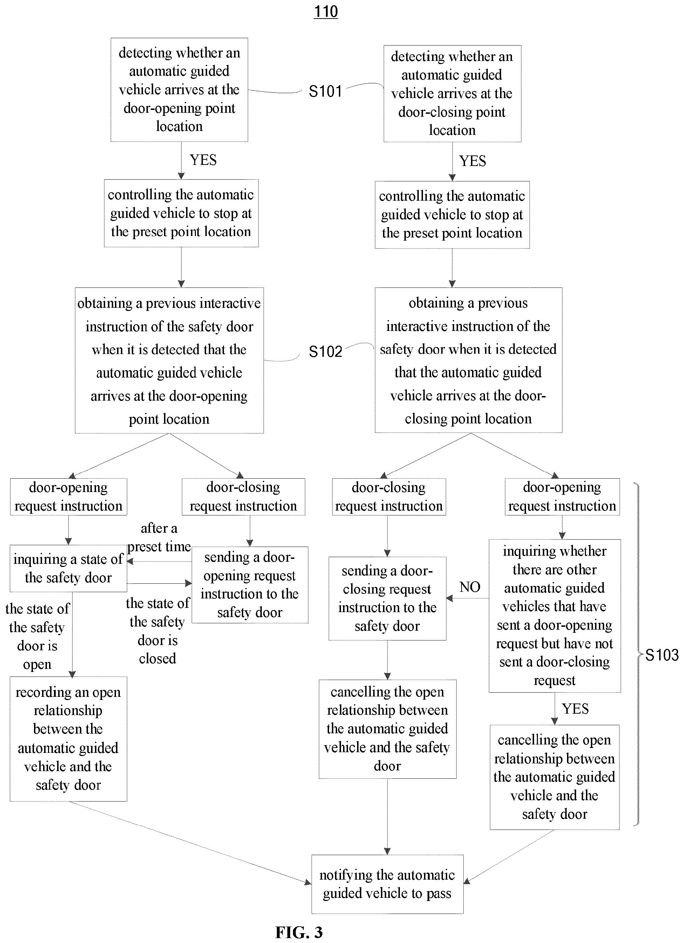

FIG. 3 is a flowchart of a control method for a safety door according to the present invention. As shown in FIG. 3, in the flowchart 110, the preset point location includes a door-opening point location and a door-closing point location. The branch on the left in FIG. 3 shows a processing flow when the automatic guided vehicle reaches the door-opening point location, and the branch on the right shows a processing flow when the automatic guided vehicle reaches the door-closing point location. As for the judgment of the door-opening point location and the door-closing point location, it can be done through the preset point location and/or edge relationship.

In the left branch of FIG. 3, the step S101 comprises: detecting whether the automatic guided vehicle arrives at the door-opening point location. As described above, it is judged through the edge relationship whether the automatic guided vehicle reaches the door-opening point location in the preset point location.

In step S102, the previous interactive instruction of the safety door is obtained when it is detected that the automatic guided vehicle arrives at the door-opening point location.

In step S103, a door-opening request instruction is sent to the safety door when the previous interactive instruction is a door-closing request instruction; and interaction is performed with the door control hardware through the ModbusTcp protocol, and a state of the safety door is inquired when the previous interactive instruction is a door-opening request instruction.

According to the present invention, as shown in FIG. 3, the step S103 further comprises: when the previous interactive instruction is a door-closing request instruction, the controller 230 interacts with the door control hardware 223 through the ModbusTcp protocol, sends a door-opening request instruction to the safety door 220, and inquiries a state of the safety door after a preset time. Alternatively, the door open state is inquired every five seconds until the safety door is opened. When the state of the safety door is open, an open relationship between the safety door and the automatic guided vehicle is recorded; and when the state of the safety door is closed, a door-opening request instruction is sent to the safety door, and the state of the safety door is inquired after a preset time until the state of the safety door is open.

According to the present invention, as shown in FIG. 3, the step S103 further comprises: notifying the automatic guided vehicle to pass after recording the open relationship between the safety door and the automatic guided vehicle. The control method 110 further comprises: in the left branch, after step S101, controlling the automatic guided vehicle to stop at the preset point location when it is detected that the automatic guided vehicle arrives at the preset point location (i.e., the door-opening point location).

According to the present invention, as shown in FIG. 3, in the branch on the right in FIG. 3, the preset point location therein includes a door-closing point location, then the step S101 comprising: detecting whether the automatic guided vehicle arrives at the door-closing point location. As described above, it is judged through the edge relationship whether the automatic guided vehicle reaches the door-closing point location in the preset point location.

In step S102, when it is detected that the automatic guided vehicle arrives at the door-closing point location, the previous interactive instruction of the safety door is obtained.

The step S103 comprises: resending a door-closing request instruction to the safety door and then allowing the automatic guided vehicle to pass when the previous interactive instruction is a door-closing request instruction; in this case, optionally, there is a disconnection in the automatic guided vehicle or other abnormal conditions. When the previous interactive instruction is a door-opening request instruction, it is inquired whether there are other automatic guided vehicles that have sent a door-opening request but have not sent a door-closing request (i.e., whether the safety door has an open relationship with other automatic guided vehicles). If so, the open relationship between the current automatic guided vehicle and the safety door will be cancelled, and the automatic guided vehicle be notified to pass. The purpose of the above inquiry is to prevent other automatic guided vehicles from sending a door-closing request instruction during the process that the automatic guided vehicle is passing through the safety door, such sending possibly causing the situation that the automatic guided vehicle cannot pass through the safety door smoothly because the safety door has been closed or is being closed; and if there are no other automatic guided vehicles that have sent a door-opening request but have not sent a door-closing request, then a door-closing request instruction will be sent, the open relationship between the automatic guided vehicle and the safety door be cancelled, and the automatic guided vehicle be notified to pass.

The open relationship between the safety door and the automatic guided vehicle will be further described below.

As shown in the left branch in FIG. 3, when the automatic guided vehicle reaches the door-opening point location, it is ensured that the state of the safety door is open. At this time, the "open relationship" between the safety door and the automatic guided vehicle, namely the corresponding relationship between the open state of the safety door and the automatic guided vehicle, will be recorded. The safety door may have an "open relationship" with a plurality of automatic guided vehicles at the same time. If the safety door has an open relationship with an automatic guided vehicle 1 and other automatic guided vehicles, for example an automatic guided vehicle 2, this indicates that the automatic guided vehicle 1 and the automatic guided vehicle 2 have sent a door-opening request instruction to the safety door and have passed through or will pass through the safety door. Assuming that the automatic guided vehicle 1 first goes to the door-closing point location and finds that there is still an open relationship between the safety door and the automatic guided vehicle 2, this indicates that the automatic guided vehicle 2 has not completely passed through the safety door, and then the automatic guided vehicle 1 does not need to send a door-closing request instruction to the safety door but can leave after directly removing its open relationship with the safety door. At this time, the safety door only has an open relationship with the automatic guided vehicle 2. When the automatic guided vehicle 2 reaches the door-closing point location, finding that only the automatic guided vehicle 2 has an open relationship with the safety door, then it is necessary to send a door-closing request instruction to the safety door before leaving.

An intelligent warehousing system and a control method for a safety door according to the examples of the present invention are described above with reference to FIGS. 1-3. The control method for the safety door can be completely applied to the intelligent warehousing system of FIG. 1.

According to one example of the present invention, the preset point location 224 includes a door-opening point location, and when the automatic guided vehicle 210 reaches the door-opening point location, it reports to the controller 230. The controller 230 is configured to send a door-opening request instruction to the safety door 220 when the previous interactive instruction is a door-closing request instruction, and interact with the door control hardware 223 through the ModbusTcp protocol and inquire the state of the safety door 220 when the previous interactive instruction is a door-opening request instruction.

According to one example of the present invention, the controller 230 is further configured to: when the previous interactive instruction is a door-closing request instruction, interact with the door control hardware 223 through the ModbusTcp protocol, inquire the state of the safety door 220 after a preset time since the door-opening request instruction is sent to the safety door 220, for example inquiring the door open state every five seconds until the safety door is opened. When the state of the safety door 220 is open, the open relationship between the safety door 220 and the automatic guided vehicle 210 is recorded; and when the state of the safety door 220 is closed, a door-opening request instruction is sent to the safety door 220.

According to one example of the present invention, the controller 230 is further configured to notify the automatic guided vehicle 210 to pass after recording the open relationship between the safety door 220 and the automatic guided vehicle 210.

According to one example of the present invention, the preset point location 224 includes a door-closing point location, and when the automatic guided vehicle 210 arrives at the door-closing point location, it reports to the controller 230. The controller 230 is further configured to send a door-closing request instruction to the safety door 220 when the previous interactive instruction is a door-closing request instruction. When the previous interactive instruction is a door-opening request instruction, it is inquired whether there are other automatic guided vehicles that have sent a door-opening request but have not sent a door-closing request. If so, the open relationship between the automatic guided vehicle and the safety door 220 will be cancelled and the automatic guided vehicle 210 will be notified to pass; and if not so, a door-closing request instruction will be sent, the open relationship between the automatic guided vehicle 210 and the safety door 220 be cancelled, and the automatic guided vehicle 210 be notified to pass.

According to one example of the present invention, the intelligent warehousing system 200 further comprises a storage unit (not shown), in which the interactive instruction of the safety door 220 and the open relationship between the automatic guided vehicle 210 and the safety door 220 are stored.

By providing a control method for a safety door, a safety door system and an intelligent warehousing system, the present invention realizes that an automatic guided vehicle in intelligent warehousing can directly interact with the safety door without manual operation, and a plurality of automatic guided vehicles can reciprocally open and close the door to come in and go out without affecting each other.

## Claims

1. A control method for a safety door, wherein a preset point location is arranged in the proximity of the safety door, the control method comprising:
S101: detecting, by an automatic guided vehicle, whether the automatic guided vehicle arrives at the preset point location by collecting and identifying a pattern on the ground;
S102: obtaining, by a controller, a previous interactive instruction to the safety door when the automatic guided vehicle reports to the controller that it is detected that the automatic guided vehicle arrives at the preset point location; and
S103: controlling, by the controller, the safety door according to a type of the previous interactive instruction,
wherein when the preset point location comprises a door-opening point location, then the step S101 comprises: detecting whether the automatic guided vehicle arrives at the door-opening point location; and
the step S103 comprises:
sending, by the controller, a door-opening request instruction to the safety door when the previous interactive instruction is a door-closing request instruction;
inquiring, by the controller, a state of the safety door when the previous interactive instruction is a door-opening request instruction;
inquiring, by the controller, a state of the safety door after a preset time since the door-opening request instruction is sent to the safety door when the previous interactive instruction is a door-closing request instruction;
recording, by the controller, an open relationship between the safety door and the automatic guided vehicle when the state of the safety door is open; and sending, by the controller, a door-opening request instruction to the safety door when the state of the safety door is closed; and
notifying, by the controller, the automatic guided vehicle to pass after recording the open relationship between the safety door and the automatic guided vehicle, and
wherein when the preset point location comprises a door-closing point location, then the step S101 comprises: detecting whether the automatic guided vehicle arrives at the door-closing point location; and
the step S103 comprises:
sending, by the controller, a door-closing request instruction to the safety door, then cancelling, by the controller, the open relationship between the automatic guided vehicle and the safety door, and notifying, by the controller, the automatic guided vehicle to pass when the previous interactive instruction is a door-closing request instruction;
inquiring, by the controller, whether there are other automatic guided vehicles that have sent a door-opening request but have not sent a door-closing request when the previous interactive instruction is a door-opening request instruction, and cancelling, if so, by the controller, the open relationship between the current automatic guided vehicle and the safety door, and notifying, by the controller, the automatic guided vehicle to pass; otherwise sending, by the controller, a door-closing request instruction, cancelling, by the controller, the open relationship between the automatic guided vehicle and the safety door, and notifying, by the controller, the automatic guided vehicle to pass.

2. An intelligent warehousing system (200), comprising:
an automatic guided vehicle (210);
a safety door (220) capable of being opened or closed, wherein a preset point location (224) is arranged in the proximity of the safety door (220);
a controller (230) in communication with the automatic guided vehicle (210) and with the safety door (220) to control the opening or closing of the safety door (220),
wherein when it is detected by the automatic guided vehicle (210) collecting and identifying a pattern on the ground that the automatic guided vehicle (210) arrives at the preset point location (224), the automatic guided vehicle (210) is configured to report to the controller (230), and the controller (230) is configured to obtain a previous interactive instruction to the safety door (220) and controls the safety door (220) according to a type of the previous interactive instruction,
wherein when the preset point location (224) comprises a door-opening point location, then the automatic guided vehicle (210) reports to the controller (230) when arriving at the door-opening point location; and the controller (230) is configured to send a door-opening request instruction to the safety door (220) when the previous interactive instruction is a door-closing request instruction, and inquire a state of the safety door (220) when the previous interactive instruction is a door-opening request instruction;
the controller (230) is further configured to inquire a state of the safety door (220) after a preset time since the door-opening request instruction is sent to the safety door (220) when the previous interactive instruction is a door-closing request instruction, record an open relationship between the safety door (220) and the automatic guided vehicle (210) when the state of the safety door (220) is open, and send a door-opening request instruction to the safety door (220) when the state of the safety door (220) is closed; and
the controller (230) is further configured to notify the automatic guided vehicle (210) to pass after recording the open relationship between the safety door (220) and the automatic guided vehicle (210), and
wherein when the preset point location (224) comprises a door-closing point location, then the automatic guided vehicle (210) reports to the controller (230) when arriving at the door-closing point location; and the controller (230) is further configured to send a door-closing request instruction to the safety door (220), cancel the open relationship between the automatic guided vehicle (210) and the safety door (220) and notify the automatic guided vehicle (210) to pass when the previous interactive instruction is a door-closing request instruction, inquire whether there are other automatic guided vehicles (210) that have sent a door-opening request but have not sent a door-closing request when the previous interactive instruction is a door-opening request instruction, cancel, if so, the open relationship between the current automatic guided vehicle (210) and the safety door (220) and notify the automatic guided vehicle (210) to pass; otherwise send a door-closing request instruction, cancel the open relationship between the automatic guided vehicle (210) and the safety door (220) and notify the automatic guided vehicle (210) to pass.

3. The intelligent warehousing system (200) according to claim 2, **characterized in that** a QR code is arranged on the point location (224), wherein the QR code comprises the pattern, then the automatic guided vehicle (210) is capable of judging the preset point location (224) by scanning and identifying the QR code, and configured to stop at the preset point location (224) when the preset point location (224) is identified.

4. The intelligent warehousing system (200) according to claim 2, **characterized in that** it further comprises a storage unit, in which the interactive instruction to the safety door (220) and the open relationship between the automatic guided vehicle (210) and the safety door (220) are stored.

## Patentansprüche

1. Steuerverfahren für eine Sicherheitstür, wobei eine voreingestellte Punktposition in der Nähe der Sicherheitstür angeordnet ist, wobei das Steuerverfahren umfasst:
S101: Erkennen durch ein fahrerloses Transportfahrzeug, ob das fahrerlose Transportfahrzeug an der voreingestellten Punktposition eingetroffen ist, durch Erfassen und Identifizieren eines Musters auf dem Boden;
S102: Erlangen einer vorherigen interaktiven Anweisung an die Sicherheitstür durch eine Steuereinrichtung, wenn das fahrerlose Transportfahrzeug der Steuereinrichtung meldet, dass es erkannt hat, dass das fahrerlose Transportfahrzeug an der voreingestellten Punktposition eingetroffen ist; und
S103: Steuern der Sicherheitstür durch die Steuereinrichtung je nach Art der vorherigen interaktiven Anweisung,
wobei, wenn die voreingestellte Punktposition eine Türöffnungspunktposition umfasst, Schließen S101 umfasst: Erkennen, ob das fahrerlose Transportfahrzeug an der Türöffnungspunktposition eingetroffen ist; und
wobei Schritt S103 umfasst
Senden einer Türöffnungsanforderungsanweisung an die Sicherheitstür durch die Steuereinrichtung, wenn die vorherige interaktive Anweisung eine Türschließanforderungsanweisung ist;
Abfragen eines Status der Sicherheitstür durch die Steuereinrichtung, wenn die vorherige interaktive Anweisung eine Türöffnungsanforderungsanweisung ist;
Abfragen eines Status der Sicherheitstür durch die Steuereinrichtung nach einer voreingestellten Zeit seit dem Senden der Türöffnungsanforderungsanweisung an die Sicherheitstür, wenn die vorherige interaktive Anweisung eine Türschließanforderungsanweisung ist;
Aufzeichnen einer offenen Beziehung zwischen der Sicherheitstür und dem fahrerlosen Transportfahrzeug durch die Steuereinrichtung, wenn der Status der Sicherheitstür "offen" ist; und Senden einer Türöffnungsanforderungsanweisung an die Sicherheitstür durch die Steuereinrichtung, wenn der Status der Sicherheitstür "geschlossen" ist; und
Unterrichten des fahrerlosen Transportfahrzeugs, dass es weiterfahren soll, nachdem die offene Beziehung zwischen der Sicherheitstür und dem fahrerlosen Transportfahrzeug aufgezeichnet wurde, und
wenn die voreingestellte Punktposition eine Türschließpunktposition umfasst, Schritt S101 umfasst: Erkennen, ob das fahrerlose Transportfahrzeug an der Türschließpunktposition eingetroffen ist; und
wobei Schritt S103 umfasst:
Senden einer Türschließanforderungsanweisung an die Sicherheitstür durch die Steuereinrichtung, dann Aufheben der offenen Beziehung zwischen dem fahrerlosen Transportfahrzeug und der Sicherheitstür durch die Steuereinrichtung und Unterrichten des fahrerlosen Transportfahrzeugs durch die Steuereinrichtung, dass es weiterfahren soll, wenn die vorherige interaktive Anweisung eine Türschließanforderungsanweisung ist;
Abfragen durch die Steuereinrichtung, ob andere fahrerlose Transportfahrzeuge vorhanden sind, die eine Türöffnungsanforderung gesendet haben, aber keine Türschließanforderung gesendet haben, wenn die vorherige interaktive Anweisung eine Türöffnungsanforderungsanweisung ist, und wenn ja, Aufheben der offenen Beziehung zwischen dem aktuellen fahrerlosen Transportfahrzeug und der Sicherheitstür durch die Steuereinrichtung und Unterrichten des fahrerlosen Transportfahrzeugs, dass es weiterfahren soll, durch die Steuereinrichtung; wenn nein, Senden einer Türschließanforderungsanweisung durch die Steuereinrichtung, Aufheben der offenen Beziehung zwischen dem fahrerlosen Transportfahrzeug und der Sicherheitstür durch die Steuereinrichtung, und Unterrichten des fahrerlosen Transportfahrzeugs durch die Steuereinrichtung, dass es weiterfahren soll.

2. Intelligentes Lagersystem (200), umfassend:
ein fahrerloses Transportfahrzeug (210);
eine Sicherheitstür (220), die geöffnet oder geschlossen werden kann, wobei eine voreingestellte Punktposition (224) in der Nähe der Sicherheitstür (220) angeordnet ist;
eine Steuereinrichtung (230) in Kommunikationsverbindung mit dem fahrerlosen Transportfahrzeug (210) und mit der Sicherheitstür (220) zum Steuern des Öffnens und Schließens der Sicherheitstür (220),
wobei, wenn durch das fahrerlose Transportfahrzeug (210), das ein Muster auf dem Boden erfasst und identifiziert, erkannt wird, dass das fahrerlose Transportfahrzeug (210) an der voreingestellten Punktposition (224) eingetroffen ist, das fahrerlose Transportfahrzeug (210) dazu konfiguriert ist, eine Meldung an die Steuereinrichtung (230) zu machen, und die Steuereinrichtung (230) dazu konfiguriert ist, eine vorherige interaktive Anweisung an die Sicherheitstür (220) zu erlangen, und die Sicherheitstür (220) je nach einer Art der vorherigen interaktiven Anweisung steuert,
wobei, wenn die voreingestellte Punktposition (224) eine Türöffnungspunktposition umfasst, das fahrerlose Transportfahrzeug (210) bei Ankunft an der Türöffnungspunktposition eine Meldung an die Steuereinrichtung (230) macht; und die Steuereinrichtung (230) dazu konfiguriert ist, eine Türöffnungsanforderungsanweisung an die Sicherheitstür (220) zu senden, wenn eine vorherige interaktive Anweisung eine Türschließanforderungsanweisung ist, und einen Status der Sicherheitstür (220) abzufragen, wenn die vorherige interaktive Anweisung eine Türöffnungsanforderungsanweisung ist;
wobei die Steuereinrichtung (230) ferner dazu konfiguriert ist, einen Status der Sicherheitstür (220) nach einer voreingestellten Zeit seit dem Senden der Türöffnungsanforderungsanweisung an die Sicherheitstür (220) abzufragen, wenn die vorherige interaktive Anweisung eine Türschließanforderungsanweisung ist, eine offene Beziehung zwischen der Sicherheitstür (220) und dem fahrerlosen Transportfahrzeug (210) aufzuzeichnen, wenn der Status der Sicherheitstür (220) "offen" ist, und eine Türöffnungsanforderungsanweisung an die Sicherheitstür (220) zu senden, wenn der Status der Sicherheitstür (220) "geschlossen" ist; und
wobei die Steuereinrichtung (230) ferner dazu konfiguriert ist, das fahrerlose Transportfahrzeug (210) zu unterrichten, dass es weiterfahren soll, nachdem die offene Beziehung zwischen der Sicherheitstür (220) und dem fahrerlosen Transportfahrzeug (210) aufgezeichnet wurde, und
wobei, wenn die voreingestellte Punktposition (224) eine Türschließpunktposition umfasst, das fahrerlose Transportfahrzeug (210) bei Ankunft an der Türschließpunktposition eine Meldung an die Steuereinrichtung (230) macht; und die Steuereinrichtung (230) ferner dazu konfiguriert ist, eine Türschließanforderungsanweisung an die Sicherheitstür (220) zu öffnen, die offene Beziehung zwischen dem fahrerlosen Transportfahrzeug (210) und der Sicherheitstür (220) aufzuheben und das fahrerlose Transportfahrzeug (210) zu unterrichten, dass es weiterfahren soll, wenn die vorherige interaktive Anweisung eine Türschließanforderungsanweisung ist, abzufragen, ob andere fahrerlose Transportfahrzeuge (210) vorhanden sind, die eine Türöffnungsanforderung gesendet haben, aber keine Türschließanforderung gesendet haben, wenn die vorherige interaktive Anweisung eine Türöffnungsanforderungsanweisung ist, wenn ja, die offene Beziehung zwischen dem aktuellen fahrerlosen Transportfahrzeug (210) und der Sicherheitstür (220) aufzuheben und das fahrerlose Transportfahrzeug (210) zu unterrichten, dass es weiterfahren soll; anderenfalls eine Türschließanforderungsanweisung zu senden, die offene Beziehung zwischen dem fahrerlosen Transportfahrzeug (210) und der Sicherheitstür (220) aufzuheben und das fahrerlose Transportfahrzeug (210) zu unterrichten, dass es weiterfahren soll.

3. Intelligentes Lagersystem (200) nach Anspruch 2, **dadurch gekennzeichnet, dass** ein QR-Code an der Punktposition (224) angeordnet ist, wobei der QR-Code das Muster umfasst, wobei das fahrerlose Transportfahrzeug (210) in der Lage dazu ist, die voreingestellte Punktposition (224) durch Abtasten und Identifizieren des QR-Codes zu beurteilen, und dazu konfiguriert ist, an der voreingestellten Punktposition (224) anzuhalten, wenn die voreingestellte Punktposition (224) identifiziert wird.

4. Intelligentes Lagersystem (200) nach Anspruch 2, **dadurch gekennzeichnet, dass** es ferner eine Speichereinheit umfasst, in der die interaktive Anweisung an die Sicherheitstür (220) und die offene Beziehung zwischen dem fahrerlosen Transportfahrzeug (210) und der Sicherheitstür (220) gespeichert sind.

## Revendications

1. Procédé de commande pour une porte de sécurité, dans lequel un emplacement de point prédéfini est agencé à proximité de la porte de sécurité, le procédé de commande comprenant les étapes suivantes :
S101 : détecter, par un véhicule à guidage automatique, si le véhicule à guidage automatique arrive à l'emplacement de point prédéfini en recueillant et en identifiant un motif sur le sol ;
S102 : obtenir, par un dispositif de commande, une instruction interactive précédente pour la porte de sécurité lorsque le véhicule à guidage automatique signale au dispositif de commande qu'il a détecté que le véhicule à guidage automatique arrive à l'emplacement de point prédéfini ; et
S103 : commander, par le dispositif de commande, la porte de sécurité selon un type de l'instruction interactive précédente,
dans lequel, lorsque l'emplacement de point prédéfini comprend un emplacement de point d'ouverture de porte, l'étape S101 comprend ce qui suit: détecter si le véhicule à guidage automatique arrive à l'emplacement de point d'ouverture de porte ; et
l'étape S103 comprend ce qui suit :
envoyer, par le dispositif de commande, une instruction de demande d'ouverture de porte à la porte de sécurité lorsque l'instruction interactive précédente est une instruction de demande de fermeture de porte ;
vérifier, par le dispositif de commande, un état de la porte de sécurité lorsque l'instruction interactive précédente est une instruction de demande d'ouverture de porte ;
vérifier, par le dispositif de commande, un état de la porte de sécurité après un délai prédéfini depuis l'envoi de l'instruction de demande d'ouverture de porte à la porte de sécurité lorsque l'instruction interactive précédente est une instruction de demande de fermeture de porte ;
enregistrer, par le dispositif de commande, une relation d'ouverture entre la porte de sécurité et le véhicule à guidage automatique lorsque l'état de la porte de sécurité est "ouvert" ; et
envoyer, par le dispositif de commande, une instruction de demande d'ouverture de porte à la porte de sécurité lorsque l'état de la porte de sécurité est "fermé" ; et
notifier, par le dispositif de commande, au véhicule à guidage automatique de passer après l'enregistrement de la relation d'ouverture entre la porte de sécurité et le véhicule à guidage automatique, et
dans lequel, lorsque l'emplacement de point prédéfini comprend un emplacement de point de fermeture de porte, l'étape S101 comprend ce qui suit : détecter si le véhicule à guidage automatique arrive à l'emplacement de point de fermeture de porte ; et
l'étape S103 comprend ce qui suit :
envoyer, par le dispositif de commande, une instruction de demande de fermeture de porte à la porte de sécurité, puis annuler, par le dispositif de commande, la relation d'ouverture entre le véhicule à guidage automatique et la porte de sécurité, et notifier, par le dispositif de commande, au véhicule à guidage automatique de passer lorsque l'instruction interactive précédente est une instruction de demande de fermeture de porte ;
vérifier, par le dispositif de commande, s'il existe d'autres véhicules à guidage automatique qui ont envoyé une demande d'ouverture de porte mais qui n'ont pas envoyé de demande de fermeture de porte lorsque l'instruction interactive précédente est une instruction de demande d'ouverture de porte, et si oui, annuler, par le dispositif de commande, la relation d'ouverture entre le véhicule à guidage automatique actuel et la porte de sécurité, et notifier, par le dispositif de commande, au véhicule à guidage automatique de passer ; dans le cas contraire, envoyer, par le dispositif de commande, une instruction de demande de fermeture de porte, annuler, par le dispositif de commande, la relation d'ouverture entre le véhicule à guidage automatique et la porte de sécurité, et notifier, par le dispositif de commande, au véhicule à guidage automatique de passer.

2. Système d'entreposage intelligent (200) comprenant :
un véhicule à guidage automatique (210) ;
une porte de sécurité (220) pouvant être ouverte ou fermée, dans lequel un emplacement de point prédéfini (224) est agencé à proximité de la porte de sécurité (220) ;
un dispositif de commande (230) en communication avec le véhicule à guidage automatique (210) et avec la porte de sécurité (220) pour commander l'ouverture ou la fermeture de la porte de sécurité (220),
dans lequel, lorsqu'il est détecté par le véhicule à guidage automatique (210) recueillant et identifiant un motif sur le sol que le véhicule à guidage automatique (210) arrive à l'emplacement de point prédéfini (224), le véhicule à guidage automatique (210) est configuré pour le signaler au dispositif de commande (230), et le dispositif de commande (230) est configuré pour obtenir une instruction interactive précédente pour la porte de sécurité (220), et commande la porte de sécurité (220) selon un type de l'instruction interactive précédente,
dans lequel, lorsque l'emplacement de point prédéfini (224) comprend un emplacement de point d'ouverture de porte, le véhicule à guidage automatique (210) signale au dispositif de commande (230) son arrivée à l'emplacement de point d'ouverture de porte ; et le dispositif de commande (230) est configuré pour envoyer une instruction de demande d'ouverture de porte à la porte de sécurité (220) lorsque l'instruction interactive précédente est une instruction de demande de fermeture de porte, et vérifier un état de la porte de sécurité (220) lorsque l'instruction interactive précédente est une instruction de demande d'ouverture de porte ;
le dispositif de commande (230) est en outre configuré pour vérifier un état de la porte de sécurité (220) après un délai prédéfini depuis l'envoi de l'instruction de demande d'ouverture de porte à la porte de sécurité (220) lorsque l'instruction interactive précédente est une instruction de demande de fermeture de porte, enregistrer une relation d'ouverture entre la porte de sécurité (220) et le véhicule à guidage automatique (210) lorsque l'état de la porte de sécurité (220) est "ouvert", et envoyer une instruction de demande d'ouverture de porte à la porte de sécurité (220) lorsque l'état de la porte de sécurité (220) est "fermé" ; et
le dispositif de commande (230) est en outre configuré pour notifier au véhicule à guidage automatique (210) de passer après l'enregistrement de la relation d'ouverture entre la porte de sécurité (220) et le véhicule à guidage automatique (210), et
dans lequel, lorsque l'emplacement de point prédéfini (224) comprend un emplacement de point de fermeture de porte, le véhicule à guidage automatique (210) signale au dispositif de commande (230) son arrivée à l'emplacement de point de fermeture de porte ; et le dispositif de commande (230) est en outre configuré pour envoyer une instruction de demande de fermeture de porte à la porte de sécurité (220), annuler la relation d'ouverture entre le véhicule à guidage automatique (210) et la porte de sécurité (220) et notifier au véhicule à guidage automatique (210) de passer lorsque l'instruction interactive précédente est une instruction de demande de fermeture de porte, vérifier s'il existe d'autres véhicules à guidage automatique (210) qui ont envoyé une demande d'ouverture de porte mais qui n'ont pas envoyé de demande de fermeture de porte lorsque l'instruction interactive précédente est une instruction de demande d'ouverture de porte, si oui, annuler la relation d'ouverture entre le véhicule à guidage automatique (210) actuel et la porte de sécurité (220) et notifier au véhicule à guidage automatique (210) de passer ; dans le cas contraire, envoyer une instruction de demande de fermeture de porte, annuler la relation d'ouverture entre le véhicule à guidage automatique (210) et la porte de sécurité (220) et notifier au véhicule à guidage automatique (210) de passer.

3. Système d'entreposage intelligent (200) selon la revendication 2, **caractérisé en ce qu'**un code QR est agencé sur l'emplacement de point (224), dans lequel le code QR comprend le motif, le véhicule à guidage automatique (210) est alors en mesure de juger de l'emplacement de point prédéfini (224) en balayant et en identifiant le code QR, et configuré pour s'arrêter à l'emplacement de point prédéfini (224) lorsque l'emplacement de point prédéfini (224) est identifié.

4. Système =: d'entreposage intelligent (200) selon la revendication 2, **caractérisé en ce qu'**il comprend en outre une unité de stockage dans laquelle sont stockées l'instruction interactive pour la porte de sécurité (220) et la relation d'ouverture entre le véhicule à guidage automatique (210) et la porte de sécurité (220).
